# EUROPEAN PATENT APPLICATION

(11) **EP 3 617 545 A1**
(43) Date of publication of application: **04.03.2020**
(21) Application number: 18191610.7
(22) Date of filing: 30.08.2018
(51) Int. Cl.: F16F 1/02, F16F 1/48, A47J 31/00

(54) **VIBRATION REDUCING MOUNTING**

(71) Applicant: Koninklijke Philips N.V., 5656 AE Eindhoven (NL)
(72) Inventor: VAN DEN BOSCH, Michael, 5656 AE Eindhoven (NL)
(74) Representative: de Haan, Poul Erik

(57) **Abstract**

The invention provides a vibration reducing mounting (80) comprising a wire (82) which follows a path which comprises a mounting portion (MP) for fixing to a component to be mounted in a first plane and first and second limbs (L1, L2) extending outwardly from the mounting portion (MP). Each limb (L1, L2) has a sequence of bends (B) and the end sections (L1_{END}, L2_{END}) lie in a second plane parallel with the first plane and which functions as a support plane. The end sections (L1_{END}, L2_{END}) extend across opposite sides of the mounting portion (MP). At least one of the bends of the bend sequences (B) has an angle of 150 degrees or less.

## Description

### FIELD OF THE INVENTION

This invention relates to a mounting device for mounting a component which suffers from vibration, and which aims to dampen those vibrations.

### BACKGROUND OF THE INVENTION

Many household appliances and other devices or machines use a suspension mounting between a vibration source such as a motor or pump and the rest of the device, to reduce vibration transmission, by isolating the vibrations from the rest of the device or damping the vibrations (i.e. dissipating their energy).

The aim is to avoid the vibrations being transferred to the outside of the device, e.g. the outer casing, which is undesirable. There is also a desire to avoid wear and noise through rattling. Certain noise components may also be particularly disturbing to users of an apparatus.

There are several known ways to reduce transmission of vibrations from a vibration source to the device housing. The most commonly used approach is a mass-spring mechanism, providing vibration reduction and vibration isolation (for example by making use of a 180 degree phase shift). Many different spring designs are known that provide vibration reduction and isolation. A wire coil spring is probably the most commonly used version. The spring may be formed as a compression spring, tension spring or torsion spring.

By way of example, a pump or motor may be mounted vertically on top of a compression spring. A pump or motor operated by the mains operates at 50 or 60 Hz and this is accordingly the main frequency at which vibrations may arise. However, there are also many harmonics, at multiples of the base 50 or 60Hz level.

For vibration isolation based on use of a coil spring, a spring design is desired with a low spring constant and low amount of damping. A low amount of damping is desirable because this corresponds to a low dissipation of energy. A high damping, for example based on a spring combined with a viscoelastic material, means that part of the movement velocity of the component (e.g. pump or motor) is partially translated into deformation in the damping material as well as the deformation of the spring. Since the deformation expends a certain amount of energy, less energy is available for resonance. In many applications, the vibration reduction method is used to reduce the vibration amplitude at resonance.

For optimal vibration cancellation, energy dissipation via damping should be prevented, instead for optimal vibration cancellation, the vibration energy should be equal but opposite in direction with the rebound energy.

Standard compression, tension and torsion coil springs, have several disadvantages relating to the dynamics and acoustics.

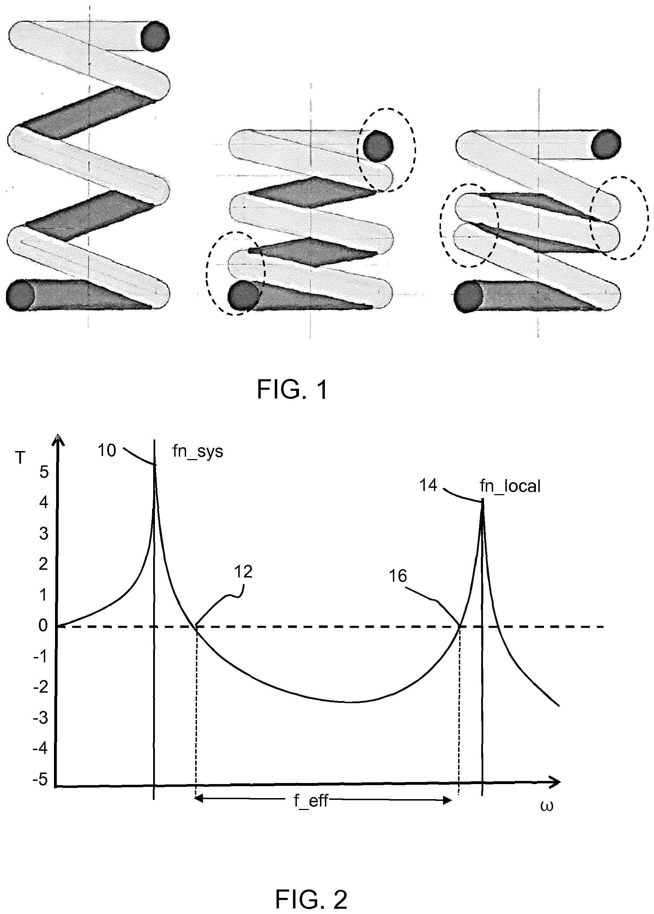

Figure 1 shows a compression coil spring in a relaxed state (left image) and in a compressed state (right two images). When vibrations are applied, the coils start to move and can touch each other as shown in the right two images in Figure 1. The coils at the ends can touch (middle image) or the middle coils can touch (right image). The coils may also rub or scrape along other device parts generating additional noise. In the middle section of the spring, this effect can be reduced by increasing the pitch, but at the ends (the start and end windings), this is often not possible. In addition, volume restrictions do not always allow such an increase in pitch.

The low spring constant of a coil spring is achieved by using multiple coils (so called "active coils"), that provide a large wire length compared to the thickness (L>>d). The low spring constant of the spring coupled to the component (motor or pump) mass results in a low system resonance frequency. Due to the relatively long but thin wire, the fundamental Eigen frequency (the first bending mode at the resonance frequency) of the spring itself is low as well. The result is a narrow effective operating range (frequency window) in which there is vibration reduction, free of resonances. This is illustrated in Figure 2, showing a plot of vibration transmission T (y-axis) as a function of angular speed ω (x-axis, rad/sec).

The value T is a measure of the amount of vibration found at the base (which should not vibrate) compared to the vibration of the vibration source. A value 0 indicates no difference between the base and the vibration source. A value >0 means amplification at the base compared to the source (i.e. resonance). A value <0 means vibration isolation.

Peak 10 is a resonance peak (i.e. resonant frequency) of the mass spring system at frequency fn_sys.

Crossing point 12 is at the frequency fn_sys * √2. This is the frequency at which vibration isolation starts.

Peak 14 is a resonance peak (i.e. resonant frequency) of the spring itself at frequency fn_local.

Crossing point 16 is at the frequency fn_local / √2. This is the frequency at which vibration isolation ends.

f_eff is the effective operating frequency window.

A coil spring consists of a long continuous curve with large radius of curvature, which does not provide additional rigidity for the wire against bending. The relatively long wire length is also not beneficial regarding optimal use of material and material cost. This length also means that the wire contains many local resonance modes, namely wire bending modes at specific frequencies, leading to reduced vibration isolation performance and other acoustic effects.

There is therefore a need for an improved design for a vibration reducing mounting.

### SUMMARY OF THE INVENTION

The invention is defined by the claims.

According to examples in accordance with an aspect of the invention, there is provided a vibration reducing mounting comprising a wire, which follows a path, which comprises:
a mounting portion for supporting a component to be mounted when in use, the mounting portion comprising a path which is adapted to be in a first plane when in use;
a first limb extending outwardly from one end of the mounting portion, wherein the first limb comprises a first sequence of bends between a first first limb section and a last first limb section, and a first limb mounting portion at the end of the last first limb section; and
a second limb extending outwardly from an opposite end of the mounting portion, wherein the second limb comprises a second sequence of bends between a first second limb section and a last second limb section, and a second limb mounting portion at the end of the last second limb section,
wherein the last first limb section and the last second limb section lie in a second plane which is adapted, when in use, to be parallel with the first plane and which functions as a support plane, with the last first limb section and the last second limb section extending at opposing sides of the mounting portion, and at least one of the bends of the first sequence and/or of the second sequence having an angle of 150 degrees or less.

This mounting makes use of a wire structure, forming an inner mounting portion and an outer support portion. This enables a structure with a low profile in that the outer support portion is around the inner mounting portion. The support plane of the outer support portion is parallel to the first plane of the mounting portion. As will be explained further down below, the bends enable the wire to have a relatively short length (e.g. compared to a multiple coil spring), and this means the local resonance modes are shifted to higher frequencies which increases the effective operating range for vibration isolation. The bends increase the local bending stiffness but maintain the overall spring constant of the mounting. Preferably, each of the bends of the first and second sequences has an angle of 150 degrees or less.

The term parallel is intended to cover minor deviations from parallel. For example, the term parallel may be taken to mean at an angle of 5 degrees or less.

The mounting may be formed as a single wire. The wire may for example be made of spring steel, and may have a diameter (or more generally a maximum linear dimension for example with a non-circular cross section) in the range of 0.5mm to 4mm, for example 0.5mm to 2mm, such as 1mm.

Note that there may be a bend between the mounting portion and the first first limb section and between the mounting portion and the first second limb section. These bends occur before the defined sequences of bends and thus do not form part of said sequences. Similarly, bends leading to the first and second limb mounting portions occur after the defined sequences of bends and thus do not form part of said sequences.

The sequences of bends are located in a section of the mounting between the mounting portion and the support plane.

The first and second planes may be offset from each other.

The offset between the first and second planes is caused by the sequences of bends, and it means bending stiffness is provided in more than one plane.

The mounting portion may comprise an open loop, the ends of the open loop defining the one end and the opposite end of the mounting portion.

The open loop may for example be clipped around a channel of the component to be mounted. This may be achieved by flexing open the open part of the loop, fitting the loop around the channel, and allowing the loop to close around the channel. This provides an easy to fit structure, in the form of a spring clip.

The first limb mounting portion and the second limb mounting portion may each comprise a hook. Each hook for example comprises a wire portion after a 90 degree bend. The hooks can be fitted into receiving portions of a support structure which is to support the component to be mounted.

Each of the bends in the sequences of bends may have a bend radius less than or equal to 10 times the diameter (or more generally maximum dimension in cross section) of the wire.

The bends are thus tight bends rather than gradual curvature in the wire. These sharp bends increase the bending stiffness.

The one end of the mounting portion is for example at one side of the mounting portion, and the other end of the mounting portion is at an opposite side of the mounting portion, wherein the mounting portion is side-side symmetrical. Thus, the limbs extend outwardly from opposite sides of the mounting portion. The overall structure may be side-side symmetrical.

The last first limb section and the last second limb section may be at an angle of less than 30 degrees to each other. Thus, they form two parallel or near parallel lines on opposite sides of the mounting portion, and thereby form a balanced support structure.

The last first limb section and the last second limb section may each have a length greater than the maximum linear dimension of the mounting portion. The support plane as defined by the last first limb section and the last second limb section can thus extend over a large area, extending beyond the projection of the mounting portion. Such support plane may provide vibration reduction of off-axis vibrations as well as axial vibration (wherein the axis may be defined as perpendicular to the first and second planes).

In a first example, the first and second sequences each comprise exactly two bends and wherein the first first limb section and the first second limb section are collinear and extend outwardly from opposite sides of the mounting portion.

This is one example, with a minimum number of bends to achieve an offset between the first and second planes.

In a second example, the first and second sequences each comprise exactly four bends, wherein the first first limb section and the last first limb section are at an angle of between 0 and 30 degrees and wherein the first second limb section and the last second limb section are at an angle of between 0 and 30 degrees.

This is another example, in which the bends form a generally U-shaped structure for each limb. The first first limb section and the first second limb section may for example be parallel and side by side and lie in the first plane.

The invention also provides a system comprising:
a vibration inducing component;
a support surface; and
a vibration reducing mounting as defined above, wherein the vibration inducing component is mounted to the mounting portion and the last first limb section and the last second limb section are mounted against the support surface.

The vibration inducing component is for example mounted vertically, such that the first plane and the second plane are horizontal. The vibration inducing component may comprise a pump or motor.

The invention also provides a coffee machine comprising:
a water reservoir;
a coffee receptacle;
a water heater; and
a system as defined above, wherein the vibration inducing component comprises a pump for delivering water from the water reservoir to water heater and/or the coffee receptacle.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Figure 1 shows a compression coil spring in a relaxed state (left image) and in a compressed state (right two images);
Figure 2 shows a plot of vibration transmission T as a function of angular speed ω (rad/sec);
Figure 3 shows how a required wire length (x-axis, mm) depends on the wire diameter (y-axis, mm) to achieve a given spring constant for different designs;
Figure 4 shows the first natural frequency (y-axis, Hz) of a spring wire depending on the spring design. The x-axis shows the required wire volume (m³);
Figure 5 shows a straight wire design and two bent wire designs;
Figure 6 shows a plot of the first natural frequency (y-axis, Hz, logarithmic scale) versus the bend angle α for a fixed effective wire length and diameter;
Figure 7 shows the effect of plotting the data from Figure 6, but with the ratio L_effective / L_wire at the x-axis (dimensionless) instead of the bend angles;
Figure 8 shows a first example of a vibration reducing mounting design based on vibration isolation;
Figure 9 is used to explain the structure of Figure 8 in more detail;
Figures 10 and 11 show possible dimensions for the design of Figures 8 and 9;
Figures 12 and 13 show a second example of a vibration reducing mounting design;
Figures 14A to 14C show the mounting of Figures 8 and 9 and the mounting of Figures 12 and 13 clipped to a base part of a pump or a pump mounting bracket;
Figures 15A and 15B show a complete pump assembly in which the base part has the mounting of Figures 8 and 9 and the mounting of Figures 12 and 13;
Figures 16A and 16B show the pump assembly of Figures 15A and 15B mounted in a coffee machine; and
Figures 17A and 17B show a coffee machine in the form of a full function espresso coffee machine.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a vibration reducing mounting comprising a wire which follows a path which comprises a mounting portion for fixing to a component to be mounted in a first plane and first and second limbs extending outwardly from the mounting portion. Each limb has a sequence of bends and the end sections lie in a second plane parallel with the first plane and which functions as a support plane. The end sections extend across opposite sides of the mounting portion. At least one of the bends and preferably each bend of the bend sequences has an angle of 150 degrees or less.

Before describing the various mounting designs, investigations which were carried out and which culminated in the designs of the invention, will first be explained.

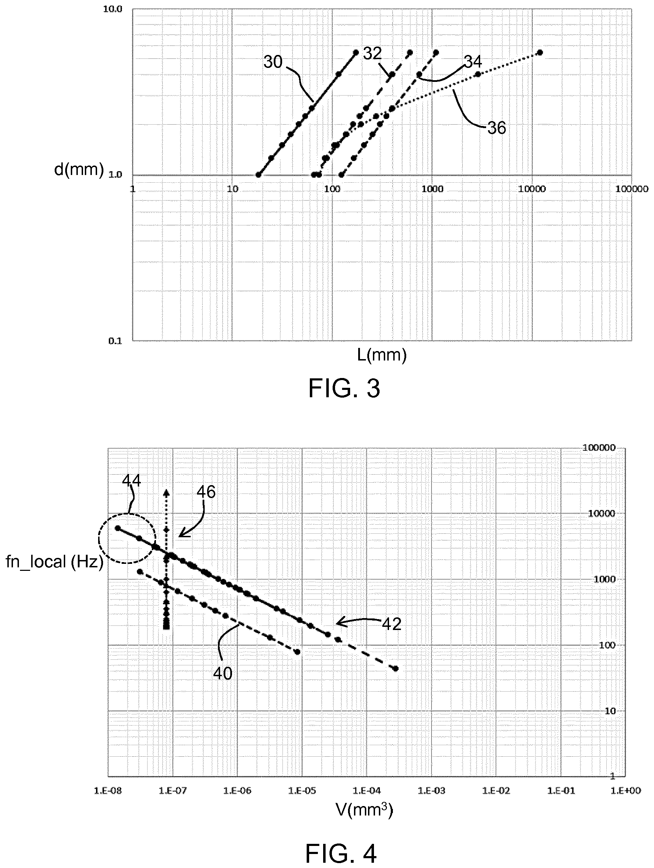

Figure 3 shows how the required wire length (x-axis, mm) depends on the wire diameter (y-axis, mm) to achieve a given spring constant (here: 10kN/m) for different designs (here: straight or coiled, coil number, coil diameter). Plot 30 is for a straight wire. Plot 32 is for a coil spring having a single coil and plot 34 is for a coil spring having five coils. The different points in the respective plots 32, 34 correspond to different coil diameters. Plot 36 is for a coil spring and the different points correspond to different numbers of coils.

Figure 3 thus generally shows that, for a given fixed spring constant (in this case 10kN/m), a straight wire requires (in most cases) much smaller wire length than different variants of coil-shaped wire springs. Generally, the shorter the free (unsupported) wire length, the higher the local or first natural bending mode frequency fn_local. The shorter length would therefore be preferred since the shorter unsupported wire length would normally also result in a higher first natural bending frequency fn local (cf. peak 14 in Figure 2).

However, wire length is not the only discriminating factor regarding the frequency fn_local, since wire thickness also plays an important role.

Figure 4 shows the first natural frequency fn_local (y-axis, Hz) of a spring wire depending on the spring design. The x-axis shows the required wire volume (m³).

Plot 40 is for a straight wire spring, simply supported at both ends, to achieve a spring constant of 1kN/m. The overlapping plots 42 are for different coil spring designs and a straight wire design to achieve a spring constant of 10kN/m. The area 44 is for the straight wire design.

The overlapping plots 42 for k=10kN/m and the region 44 show that a straight wire spring design indeed enables the spring volume requirement to be lower than for a coil spring design. The straight wire spring design provides a higher local bending mode frequency fn_local (cf. peak 14 in Figure 2).

However, a large part of the straight wire plot overlaps with the volume requirements (and thus fn_local) of a coil spring shape, meaning that there is a limited benefit for a straight wire spring design to achieve a given spring constant.

Plot 40 shows that the resonance frequencies can be influenced by changing the spring constant (k=10kN/m for all other plots) to a different value (k=1kN/m).

In order to shift the first resonance frequency of the spring itself, the invention makes use of sharp bends along the length of the wire. This provides segmentation of the wire into segments between the bends, and the local bending frequency fn_local, can be increased dramatically.

Plot 46 shows the results for examples of wires with 1 and 2 bends, simply supported at both ends.

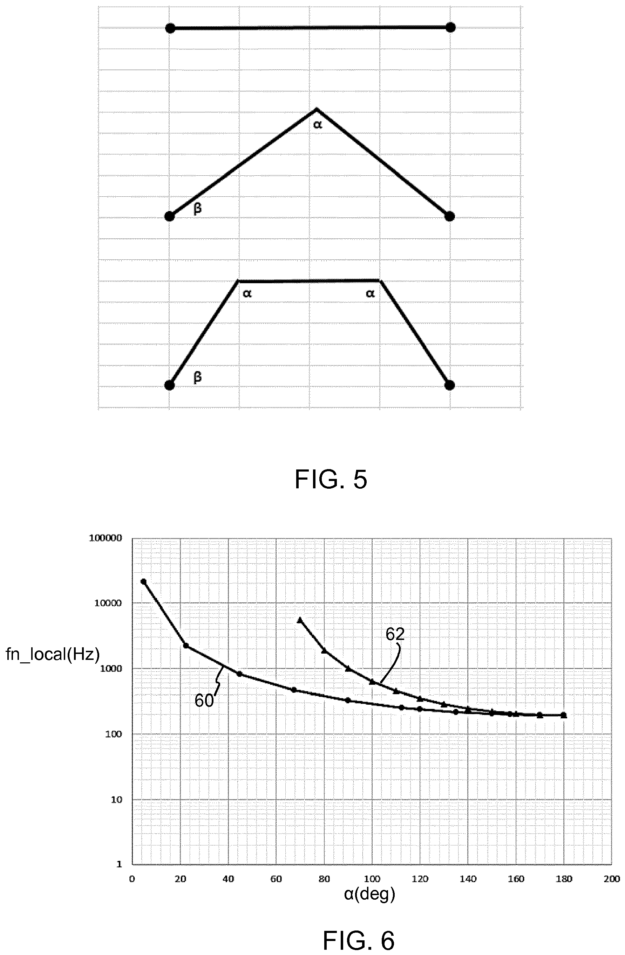

Figure 5 shows these wire designs. The top image shows a straight wire, the middle image shows a wire with one bend in the middle with angle α and angle β at the two simply supported ends, and the bottom image shows a wire with two bends in the middle each with angle α, and angle β at the two simply supported ends. The two bend angles α do not have to be equal. The bend angle β is with reference to the horizontal. The horizontal distance between the two support points may be considered to be an effective length L_eff.

Figure 6 shows a plot of the first natural frequency fn_local (y-axis, Hz, logarithmic scale) i.e. the peak 14 in Figure 2 versus the bend angle α (x-axis, degrees) for a fixed effective wire length and diameter. Plot 60 is for one bend and plot 62 is for two bends (wire diameter 1mm, length 10cm).

Figure 6 shows that the smaller the bend angle α, the higher the first resonance frequency fn local becomes. The required bend angle α is dependent on the number of bends, but roughly ≤150° for a number n of bends n=1 and n=2 in these examples.

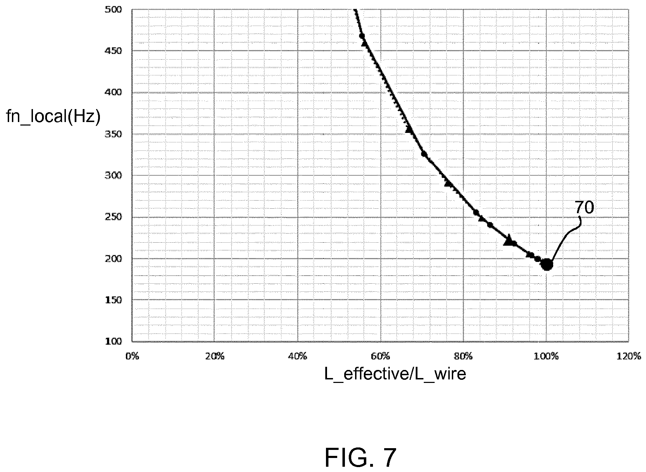

To simplify further, Figure 7 shows the effect of plotting the data from Figure 6, but with the ratio L_effective / L_wire (as the x-axis, dimensionless) instead of the bend angles.

The point 70 is a reference with no bend. The first resonance frequency fn_local increases as the ratio is reduced. The lines now plot on top of each other, meaning that the ratio L_effective / L wire determines the amount of shift of the first natural frequency fn_local of the spring wire itself. By way of example, to obtain 10% shift of fn_local, the ratio L_effective / L_wire needs to be reduced to approximately 90%.

To obtain a substantial benefit regarding the acoustics and dynamics, a shift of ≥25% in the value of fn_local would be preferred, meaning that the ratio L_effective / L_wire should be reduced to around at most 85% of the value for a straight wire.

The increase in resonance frequency fn local is valid for a vertical bending direction as shown in Figure 5. For multiple bends, the bends will be in multiple directions.

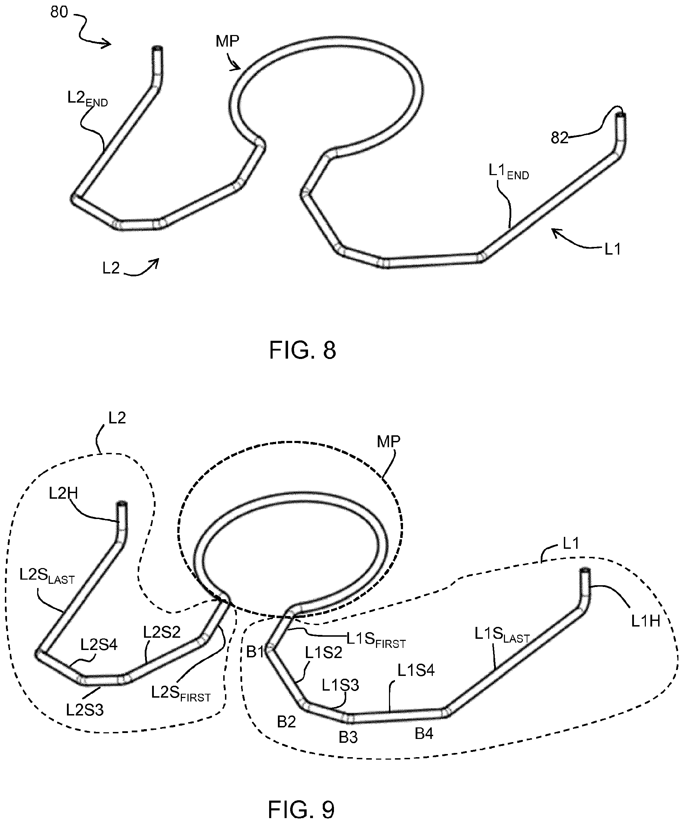

Figure 8 shows a first example of a design for a vibration reducing mounting which has been developed based on the findings explained above.

The vibration reducing mounting 80 comprises a wire 82, which follows a path which comprises a mounting portion MP for fixing to a component to be mounted in a first plane and first L1 and second L2 limbs extending outwardly from the mounting portion. Each limb L1, L2 has a sequence of bends. In this example, there are four bends in each limb (after the first bend leading out from the mounting portion and before the final bend leading to a hook at the end of the wire). The end sections L1_{END} and L2_{END} lie in a second plane parallel with the first plane and which functions as a support plane. The end sections extend across opposite sides of the mounting portion. Each of the bends of the bend sequences has an angle of 150 degrees or less. In this example the bends are all in the range 135 to 140 degrees.

Note that the planes of the mounting portion MP and the end sections are intended to be parallel when the mounting 80 is in a loaded condition, i.e. when the mounting portion is supporting the vibrating component.

Before supporting the vibrating component, the mounting portion may be non-parallel with the plane of the end portions (which may be considered to be a support plane). For example, with reference to Figure 8, the top right part of the loop forming the mounting portion (i.e. opposite the opening in the loop) may be elevated. Only when supporting the mass of the vibrating component will the mounting portion bend down against the spring bias of the wire to bring the plane of the mounting portion parallel or near parallel with the support plane.

Thus, the planes are parallel in use, by which is meant when the mounting 80 is in a loaded state. In the unloaded state, there may be an angle of 10 to 40 degrees between the plane of the mounting portion and the support plane.

The mounting 80 has no wire parts close to each other, which prevents rattling or scratching noises. The wire 82 generally has the mounting portion MP in one plane and both ends in another plane (rather than one end at the top and one end at the bottom as is the case for a coil spring).

In the example shown, each limb L1, L2 defines a 180 degree path from its exit direction from the mounting portion MP to the end of the limb. In an alternative embodiment (not shown) the path of each limb may define at most 270 degrees from the exit from the mounting portion to the end of the limb (in which case the limbs together form one circle around the mounting portion). Thus, the limbs together define at most one circuit around the mounting portion.

In Figure 8, the mounting portion MP comprises a ring for supporting or attachment to the vibration source, and its plane is at a different height compared to the support plane defined by the end sections L1_{END} and L2_{END}. This requires that some bends (e.g. bends B1 and B2, see Figure 9) are not in the same plane as the other bends. An advantage of this is that it provides bending stiffness in other planes, other than only in the horizontal plane.

Corresponding pairs of limb sections for example each lie in a respective plane, and the planes for the pairs of limb sections are not then parallel with the support plane and the plane of the mounting portion. Thus, third and further planes may be considered to be defined by the structure.

In the simpler alternative of a planar structure (i.e. the first and second planes are the same plane) the wire would be able to bend easily into the orthogonal plane. This may or may not be desirable, depending on the nature of the vibrations to be isolated. An offset between the two planes is in most cases preferred but it is not essential.

Figure 9 is used to explain the structure in more detail, in particular the limbs are referenced in more detail. The first limb L1 comprises a first sequence of bends B1 to B4 between a first first limb section L1S_{FIRST} and a last first limb section L1S_{LAST} (corresponding to L1_{END} in Fig 8), and a first limb mounting portion L1H at the end of the last first limb section L1S_{LAST}.

Note the reference LxSy denotes limb number x (1 or 2) and section number y (first through to last) for that limb. The notation "n^{th} m^{th} limb section" denotes the n^{th} section of the m^{th} limb.

The second limb L2 comprises a second sequence of bends between a first second limb section L2S_{FIRST} and a last second limb section L2S_{LAST} (corresponding to L2_{END} in Figure 8), and a second limb mounting portion L2H at the end of the last second limb section L2S_{LAST}.

Because there are four bends, there are five sections in total, i.e. three more (L1S2, L1S3, L1S4 for the first limb and L2S2, L2S3, L2S4 for the second limb) between the first and last sections.

The last limb sections L1S_{LAST} and L2S_{LAST} extend across opposite sides of the mounting portion MP. Thus they form a cradle structure on both sides of the mounting portion MP. At least one bend and preferably each bend is sufficiently tight (with an angle of 150 degrees or less, preferably 140 degrees or less) to influence the rigidity of the structure.

The offset between the first and second plane is for example in the range 10% to 50% of the maximum linear dimension of the mounting.

As shown in Figures 8 and 9, the mounting portion MP comprises an open loop, wherein the ends of the open loop define one end and an opposite end of the mounting portion. The limbs L1, L2 may be pulled apart to open the loop further so that it may pass around the vibration source to be held by the mounting portion. Alternatively, the vibration source may simply sit on top of the mounting portion under the weight of gravity.

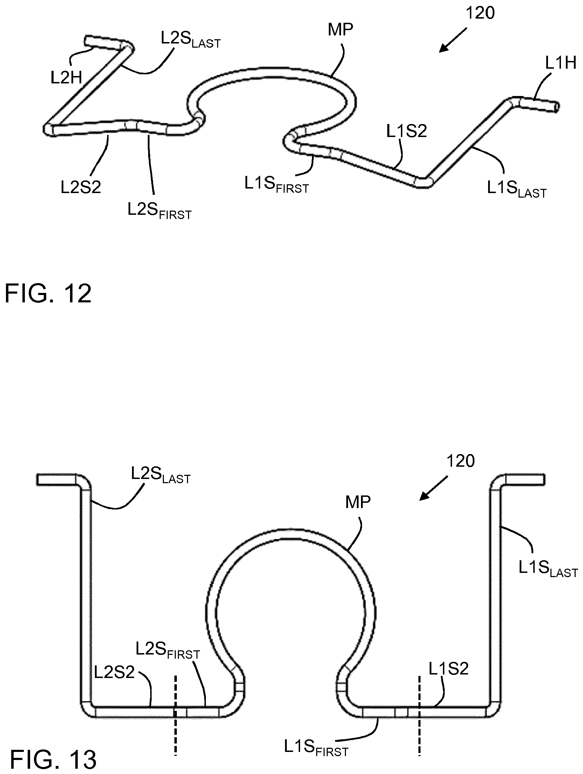

The first limb mounting portion L1H and the second limb mounting portion L2H each comprise a hook. The hook may extend in different directions. In Figure 8 and 9, the hooks extend perpendicularly to the first and second planes. In an alternative embodiment (see Figures 12 and 13) the hooks may extend parallel to the first and second planes. The hooks may be used to couple to openings or formations in the housing of the device in which the mounting is to be used. The hooks may be biased into those openings, respectively formations. For example, for the embodiment of Figure 9 and 8, the end sections L1S_{LAST} (L1_{END}) and L2S_{LAST} (L2_{END}) maybe pulled together for insertion into the openings or formations. The hooks may function as assembly and alignment features.

At least one of the bends B1 to B4 and preferably each bend in the sequences of bends is a sharp bend and thus preferably has a bend radius less than or equal to 10 times the diameter of the wire.

The ends of the mounting portion MP are at opposite sides of a side-side symmetrical shape as shown. In the example of Figure 8 and 9, the first first limb section L1S_{FIRST} and the last first limb section L1S_{LAST} are near parallel, hence at an angle of between 0 and 30 degrees and the first second limb section L2S_{FIRST} and the last second limb section L2S_{LAST} are also near parallel, hence at an angle of between 0 and 30 degrees. The limbs thus form a U-shape in plan view. The first first limb section L1S_{FIRST} and the first second limb section L2S_{FIRST} may be parallel and side by side, as illustrated. The first first limb section L1S_{FIRST} and the first second limb section L2S_{FIRST} may lie in the first plane, as illustrated. The last first limb section L1S_{LAST} and the last second limb section L2S_{LAST} may be parallel or near parallel, hence at an angle of less than 30 degrees to each other. They may thus form a pair of supporting rails on opposite sides of the mounting portion MP.

As illustrated in Figure 8 and 9, the last first limb section L1S_{LAST} and the last second limb section L2S_{LAST} may each have a length greater than the maximum linear dimension of the mounting portion MP (i.e. the diameter of the loop). One end of each last limb section may be in front of the mounting portion and the other end may be behind the mounting portion. Thus, the last limb sections can provide a stable base for supporting the mounting portion on a support surface. They may provide support for vibrations which are perpendicular to the first and second planes or offset from that perpendicular direction.

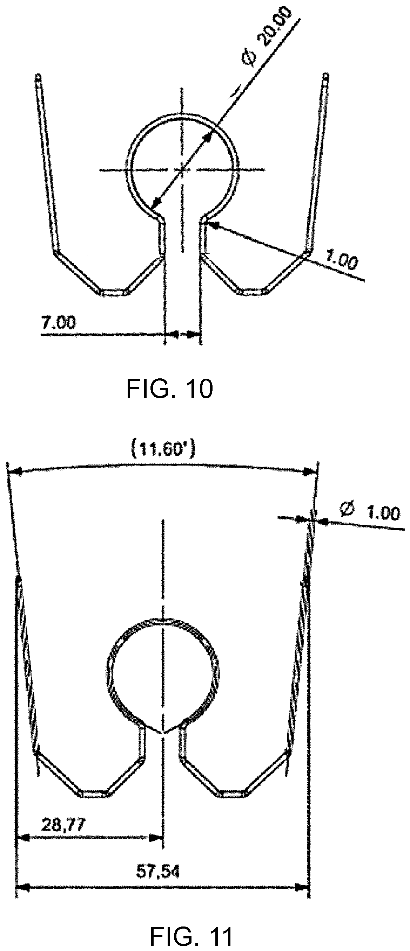

By way of example, Figure 10 and 11 show possible dimensions.

As shown, the mounting portion MP comprises a loop of diameter 20mm (e.g. in the range 10mm to 40mm). The wire has a diameter 1mm (e.g. in the range 0.5mm to 4mm). The first first limb section L1S_{FIRST} and the first second limb section L2S_{FIRST} are spaced by 7mm (generally between 25% and 50% of the maximum dimension of the mounting portion).

The last first limb section L1S_{LAST} and the last second limb section L2S_{LAST} are at an angle of 11.6 degrees in this example and the maximum overall width is 57.54mm (e.g. in the range 30mm to 100mm).

The offset between the two planes in this example is 10mm (e.g. in the range 25% to 100% of the maximum dimension of the mounting portion, not referenced in the figures).

Figures 8 to 11 show an embodiment with four bends per limb. Figures 12 and 13 show an embodiment 120 in which the first and second sequences each comprise exactly two bends. Figure 12 is a perspective view and Figure 13 is a plan view. In this embodiment, the first first limb section L1S_{FIRST} and the first second limb section L2S_{FIRST} are collinear and extend outwardly (in opposite directions) from opposite sides of the mounting portion MP. The limbs in this design form an L-shape in plan view. Each limb thus has three sections; a first, second and last.

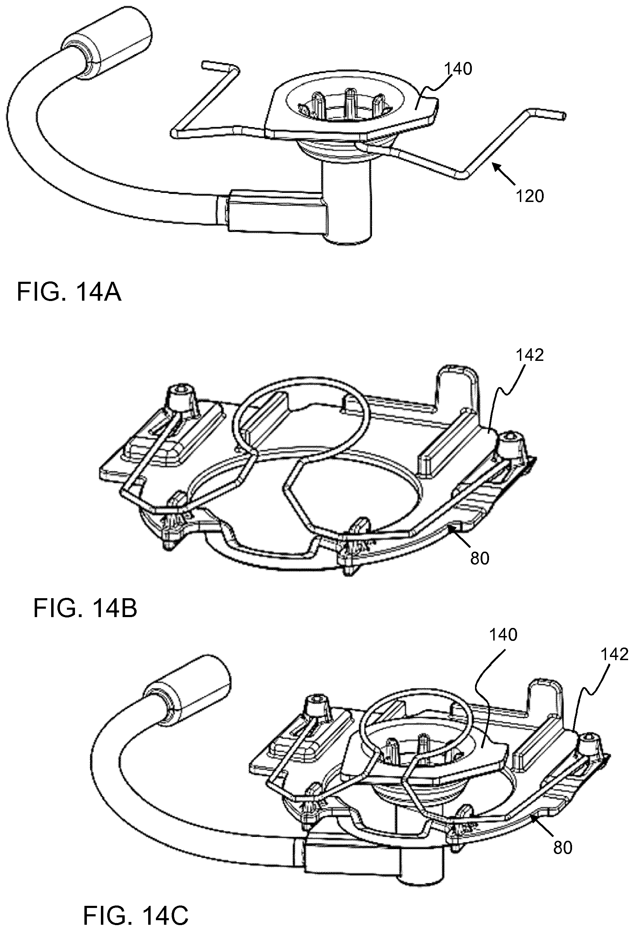

Figure 14A shows the mounting 120 of Figures 12 and 13 clipped to a base part 140 of a pump. The pump is one example of a possible vibration inducing component.

Figure 14B shows the mounting 80 of Figures 8 and 9 mounted on a pump support bracket 142 but supported loosely rather than being clipped to the base part of the pump. In Figure 14B, the upward tilt of the mounting portion can be seen, because the mounting is not yet supporting the weight of the pump. When fully installed, the mounting portion is bent down to lie in a plane parallel with the support plane, i.e. parallel with the last limb sections.

As shown in Figure 14C, the base part 140 of the pump may sit beneath the mounting 80, and the mounting 80 is attached to the pump by clamping between the base part 140 of the pump and the main pump body.

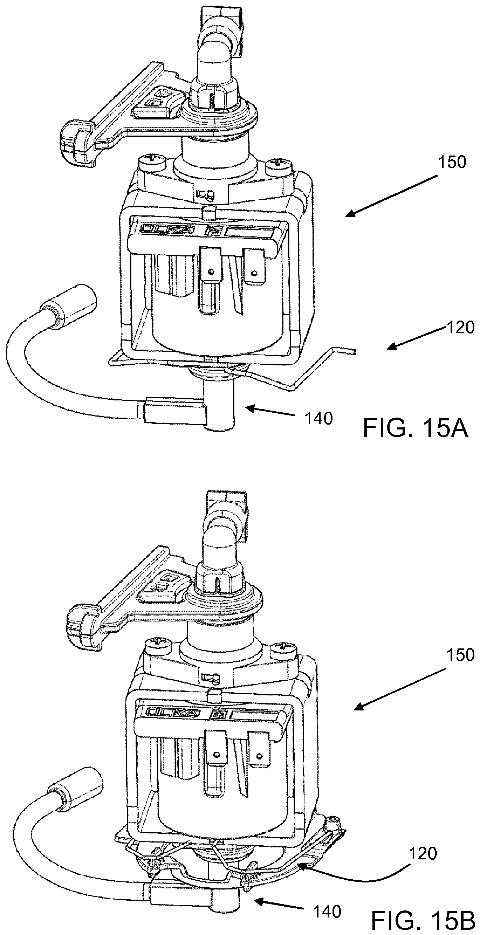

Figure 15A shows a complete pump assembly 150 in which the base part 140 has the mounting 120 of the type shown in Figures 12 and 13.

Figure 15B shows a complete pump assembly 150 in which the mounting 80 of the type shown in Figures 8 and 9 is clamped between the base part 140 of the pump and the main pump body.

Of course, any attachment approach for connecting to the pump may be used with any particular mounting embodiment.

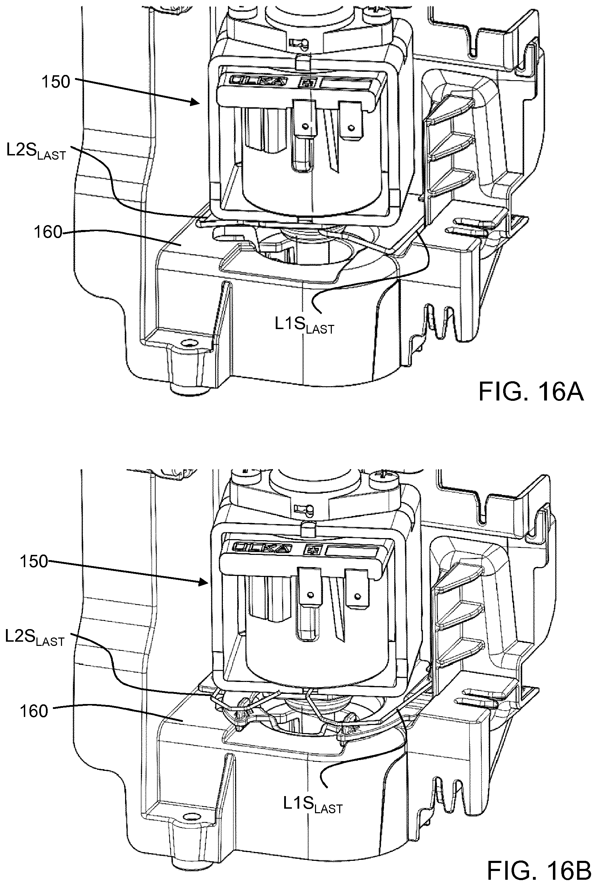

Figure 16A shows the pump assembly 150 of Figure 15A mounted in a coffee machine, and Figure 16B shows the pump assembly 150 of Figure 15B mounted in a coffee machine. The internal parts of the coffee machine define a support surface 160 on which the last sections L1S_{LAST} and L2S_{LAST} rest. The mounting 80, 120 is held to the support structure (of which the surface 160 is part) by the hooks L1H, L2H.

The support surface 160 provides support for downward movement of the mounting. All that is needed for the hooks L1H, L2H is that they are fitted in a way that resists upward movement. They may for example simply be inserted beneath a downward facing support surface or maneuvered into a retaining spigot as shown in Figures 14B and 14C.

The coffee machine itself comprises a water reservoir, a coffee receptacle, a water heater and the pump for delivering water from the water reservoir to the water heater and/or to the coffee receptacle. The use of the mounting does not require any change to other features of the coffee machine, and hence a detailed discussion of known design features of coffee machines will not be presented.

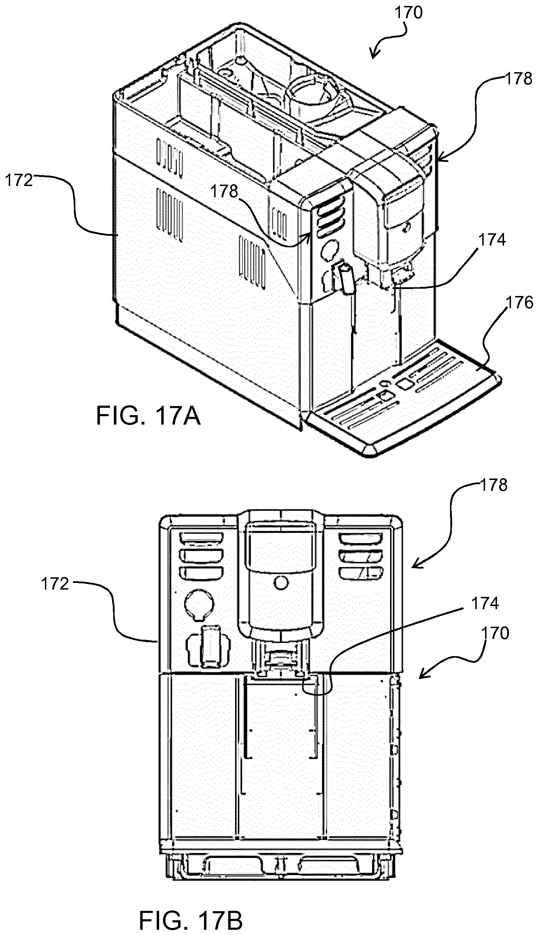

For completeness, Figures 17A and 17B show a coffee machine 170. Figure 17A shows a perspective view and Figure 17B shows a view from in front. This example is a bean-to-cup machine, comprising a main body 172, housing a water reservoir, a water heater and a reservoir for receiving coffee beans. There is an internal grinding mechanism for creating coffee grind, a brewing chamber or brew group for receiving the coffee grind, and a pumping system for pumping heated water through the coffee grind. The machine further comprises a drip tray 176, an output tube 174 located over the drip tray 176 and a user interface 178 for receiving user selections. In other examples (not shown) the coffee machine 170 could be a capsule or pod machine, wherein the brewing chamber or brew group is designed to receive a (disposable) capsule or pod, filled with ground coffee.

The invention is not limited to coffee machines. It may be used in any domestic appliance with a pump or motor, such as an iron, steamer, vacuum cleaner, air cleaner, air humidifier, air dehumidifier, hair dryer, shaver, medical equipment etc.

The examples above show a mounting formed from a wire. The wire may have a circular cross section, but other profiles are possible, such as a solid square or rectangular cross section, or a hollow profile such a closed pipe or even an open hollow shape such as a U-shaped profile. The cross-sectional shape may also vary along the length of the wire. Changing the profile locally may be used to tune the bending rigidity in different directions and change the mass distribution along the wire, meaning that the effective operating window can be increased (with the aim of increasing fn_local). The wire may also be formed of multiple profiles which function together as one, such as stacked, wound, or interlocking components.

The examples above show three and five limb sections, but there may be many more, defining a more progressively curved shape. Increasing the number of limb sections distributes the load on each limb, allowing shorter limb wire lengths and thus a larger operating window (again with the aim of increasing fn_local). There is however the constraint that there are bends rather than a smooth curve, in particular discrete bends of 150 degrees or less.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A vibration reducing mounting comprising a wire which follows a path which comprises:
a mounting portion (MP) for supporting a component to be mounted when in use, the mounting portion comprising a path which is adapted to be in a first plane when in use;
a first limb (L1) extending outwardly from one end of the mounting portion, wherein the first limb comprises a first sequence of bends (B) between a first first limb section (L1S_{FIRST}) and a last first limb section (L1S_{LAST}), and a first limb mounting portion (L1H) at the end of the last first limb section (L1S_{LAST}); and
a second limb (L2) extending outwardly from an opposite end of the mounting portion (MP), wherein the second limb comprises a second sequence of bends (B) between a first second limb section (L2S_{FIRST}) and a last second limb section (L2S_{LAST}), and a second limb mounting portion (L2H) at the end of the last second limb section (L2S_{LAST}),
wherein the last first limb section (L1S_{LAST}) and the last second limb section (L2S_{LAST}) lie in a second plane which is adapted, when in use, to be parallel with the first plane and which functions as a support plane, with the last first limb section (L1S_{LAST}) and the last second limb section (L2S_{LAST}) at opposing sides of the mounting portion (MP), and at least one of the bends of the first sequence and/or of the second sequence having an angle of 150 degrees or less.

2. A mounting as claimed in claim 1, wherein the first and second planes are offset from each other.

3. A mounting as claimed in claim 1 or 2, wherein the mounting portion (MP) comprises an open loop, the ends of the open loop defining the one end and the opposite end of the mounting portion.

4. A mounting as claimed in any one of claims 1 to 3, wherein the first limb mounting portion (L1H) and the second limb mounting portion (L2H) each comprise a hook.

5. A mounting as claimed in any one of claims 1 to 4, wherein at least one of the bends in the sequences of bends has a bend radius less than or equal to 10 times the diameter of the wire.

6. A mounting as claimed in any one of claims 1 to 5, wherein the one end of the mounting portion is at one side of the mounting portion, and the other end of the mounting portion is at an opposite side of the mounting portion, wherein the mounting portion is side-side symmetrical.

7. A mounting as claimed in any one of claims 1 to 6, wherein the last first limb section (L1S_{LAST}) and the last second limb section (L2S_{LAST}) are at an angle of less than 30 degrees to each other.

8. A mounting as claimed in any one of claims 1 to 7, wherein the last first limb section and the last second limb section each have a length greater than the maximum linear dimension of the mounting portion.

9. A mounting as claimed in any one of claims 1 to 8, wherein the first and second sequences of bends each comprise exactly two bends and wherein the first first limb section and the first second limb section are collinear and extend outwardly from opposite sides of the mounting portion.

10. A mounting as claimed in any one of claims 1 to 8, wherein the first and second sequences of bends each comprise exactly four bends, wherein the first first limb section (L1S_{FIRST}) and the last first limb section (L1S_{LAST}) are at an angle of between 0 and 30 degrees and wherein the first second limb section (L2S_{FIRST}) and the last second limb section (L2S_{LAST}) are at an angle of between 0 and 30 degrees.

11. A mounting as claimed in claim 10, wherein the first first limb section and the first second limb section are parallel and side by side and lie in the first plane.

12. A system comprising:
a vibration inducing component;
a support surface; and
a vibration reducing mounting as claimed in any one of claims 1 to 11, wherein the vibration inducing component is mounted to the mounting portion and the last first limb section and the last second limb section are mounted against the support surface.

13. A system as claimed in claim 12, wherein the vibration inducing component is mounted vertically, such that the first plane and the second plane are horizontal.

14. A system as claimed in claim 12 or 13, wherein the vibration inducing component comprises a pump or motor.

15. A coffee machine comprising:
a water reservoir;
a coffee receptacle;
a water heater; and
a system as claimed in claim 12 or 13, wherein the vibration inducing component comprises a pump for delivering water from the water reservoir to the water heater and/or coffee receptacle.
